# EUROPÄISCHE PATENTSCHRIFT

(11) **EP 2 449 873 B1**
(45) Veröffentlichungstag und Bekanntmachung des Hinweises auf die Patenterteilung: **29.03.2017**
(21) Anmeldenummer: 11008791.3
(22) Anmeldetag: 04.11.2011
(51) Int. Cl.: A01D 75/08, A01F 29/09, A01F 15/10

(54) **Erntemaschine mit Schleifeinrichtung**
Agricultural machine with a grinding device
Machine de récolte pourvue d'un dispositif d'affûtage.

(30) Priorität: 05.11.2010 DE 102010050584
(43) Veröffentlichungstag der Anmeldung: 09.05.2012
(73) Patentinhaber: PÖTTINGER Landtechnik GmbH, 4710 Grieskirchen (AT)
(72) Erfinder: Pöttinger, Klaus, 4710 Grieskirchen (AT)
(74) Vertreter: Thoma, Michael

(56) Entgegenhaltungen:
- EP-A1- 2 272 318
- DE-C1- 3 711 355
- DE-U1- 9 308 656

## Beschreibung

Die vorliegende Erfindung betrifft eine Erntemaschine, insbesondere ein Form eines Ladewagens oder einer Ballenpresse, mit einer Aufnahmevorrichtung zum Aufnehmen von Erntegut vom Boden, einem an die Aufnahmevorrichtung anschließenden Förderkanal, der in einen Erntegutspeicher und/oder eine Verarbeitungskammer wie Pressenkammer führt, einer Schneidvorrichtung mit mehreren Messern zum Zerschneiden des durch den Förderkanal geförderten Ernteguts sowie einer Schleifvorrichtung zum Schleifen der Messer.

Bei Ladewagen und Ballenpressen müssen die Messer, mittels derer das aufgenommene Erntegut zerschnitten wird, regelmäßig nachgeschliffen werden, um einerseits das Erntegut schonend zu zerschneiden, andererseits zu hohe Schnittkräfte und ein Verstopfen des Förderkanals zu vermeiden. Üblicherweise müssen die Messer dabei mehrmals täglich nachgeschliffen werden. Um einen Ein- und Ausbau und damit entsprechende Stillstandszeiten zu vermeiden, wurden bereits am Ladewagen arbeitende Schleifvorrichtungen vorgeschlagen, so z.B. in der DE 35 20 273 A1 oder der DE 33 23 116. Dabei werden üblicherweise die Messer auf einem schwenkbaren Messerbalken angeordnet, so dass sie aus dem Förderkanal heraus in eine Schleifposition geschwenkt werden können. Ein mit einer rotierenden Schleifscheibe versehener Schleifer ist dabei an einem Schwenkarm pendelnd aufgehängt, so dass durch eine Pendelbewegung des Schwenkarms die Schleifscheibe über die üblicherweise bogenförmig gerundete Schneide eines Messers fahrbar ist. Um den Schleifer von Messer zu Messer fahren zu können, ist der genannte Schwenkarm, der den Schleifer trägt, an einer Quertraverse quer zur Schnittrichtung der Messer verschieblich gelagert.

Eine in ähnlicher Weise arbeitende Schleifvorrichtung für einen Ladewagen ist aus der DE 20 2004 004 133 U1 bekannt. Dabei wurde auch bereits vorgeschlagen, mit mehreren Schleifern gleichzeitig zu arbeiten, um mehrere Messer gleichzeitig zu schärfen, vgl. DE 10 2004 037 212.

Um die Messer auch während des Ladebetriebs schleifen zu können, wurde in der EP 18 82 407 vorgeschlagen, die Messer rotatorisch zu lagern, über den Umfang versetzt mit mehreren Schneiden zu versehen und das Messer nach Art eines Revolvermagazins weiter zu schalten, so dass eine der Schneiden im Förderkanal arbeitet, während eine weitere Schneide außerhalb des Förderkanals zu liegen kommt, so dass sie dort geschliffen werden kann.

Um ein Schleifen nur dann in Gang zu setzen, wenn die Schneide eines Messers dies tatsächlich benötigt, ist in der DE 20 2004 004 133 vorgeschlagen, die Messerschärfe zu erfassen und den Schleifvorgang nur in Abhängigkeit des erfassten Schärfezustandes zu starten, wobei ggf. auch nur selektiv einzelne Messer eines Messerbalkens geschliffen werden, um die Schleifzeiten zu verkürzen und noch scharfe Messer nicht unnötig herunterzuschleifen.

Ein solches Messerschleifen unmittelbar am Ladewagen ist jedoch mit verschiedenen Schwierigkeiten behaftet, die in ihrer Summe bislang noch nicht optimal gelöst sind. Einerseits muss bei nur schwach gekrümmten Schneiden bei pendelnder Schleiferaufhängung der Schwenkarm, an dem der Schleifer pendelnd aufgehängt ist, entsprechend lang ausgebildet sein, um der schwach gekrümmten Schneide folgen zu können. Hierdurch treten ungünstige Hebelverhältnisse an dem Schwenkarm auf, d.h. die Anpresskraft, die am freien Ende des Schwenkarms in diesen eingeleitet wird, erzeugt aufgrund der Länge des Schwenkarms in diesem hohe Biegemomente, die zu einem seitlichen Wegbiegen oder einem Verkanten des Schleifarms führen können. Zum anderen wird für die Schleiferaufhängung recht viel Bauraum benötigt, der unter einem Ladewagen gerade in vertikaler Richtung nicht vorhanden ist.

Um trotz des unter dem Förderkanal bzw. Maschinenboden nicht vorhandenen Platzes die erforderliche Relativbewegung zwischen Schleifer und Messer zu erzeugen, wurde daher bereits angedacht, anstelle der üblichen pendelnden Aufhängung des Schleifers mittels eines Schwenkarms, wie beispielsweise in der DE 10 2004 037 212 B4 gezeigt, die Kinematik der Schleiferbewegung durch eine Schlittenlagerung des Schleifers zu realisieren, bei der das Schleifwerkzeug in einer kulissenartigen Schiebeführung verschieblich ist, um dem üblicherweise bogenförmigen Schneidenverlauf der Messer folgen zu können. Eine solche Schlittenführung baut insbesondere in vertikaler Richtung deutlich niedriger als eine pendelnde Aufhängung. Nichtsdestotrotz müssen die Messer relativ tief abgesenkt werden, um Platz für die Bewegung des Schleifers unter dem Förderkanal bzw. Ladewagenboden zu schaffen, wodurch es zu einer Einschränkung der Bodenfreiheit der Erntemaschine kommen kann. Ferner können im Bereich unmittelbar hinter dem Förderkanal bzw. unter dem daran anschließenden Maschinenboden weitere Maschinenkomponenten wie Sensoren, Stellmotoren, Wartungsklappen und dergleichen nur schwierig vorgesehen werden, da dieser Raum für den Arbeitsbereich der Schleifvorrichtung freigehalten werden muss.

In der Schrift DE 37 11 355 C1 wird vorgeschlagen, den Messerbalken quer zur Fahrtrichtung zur Seite hin herauszuschieben, um die Messer besser zugänglich zu machen und seitlich neben dem Ladewagen zu schleifen. Ferner beschreibt die Schrift DE 93 08 656 U1 einen Ladewagen, bei dem die Messer mittels einer Schiebeführung seitlich unter dem Ladewagen herausgeschoben werden können, wobei die Messer auf zwei separaten Wägen angeordnet sein können, so dass sie nach rechts und links herausgefahren werden können.

Hiervon ausgehend liegt der vorliegenden Erfindung die Aufgabe zugrunde, eine verbesserte Erntemaschine der genannten Art zu schaffen, die Nachteile des Standes der Technik vermeidet und Letzteren in vorteilhafter Weise weiterbildet. Vorzugsweise soll eine verbesserte, Platz sparende Schleifvorrichtung zum Schleifen der Messer an der Erntemaschine geschaffen werden, die die für den Schleifvorgang notwendige Kinematik ohne diffizile Schleiferaufhängung ermöglicht und ein automatisches Messerschleifen auch bei Erntemaschinen mit nur sehr geringem
Platzangebot hinter dem Förderkanal bzw. unter dem anschließenden Maschinenboden erlaubt.

Diese Aufgabe wird erfindungsgemäß durch eine Erntemaschine nach Anspruch 1 gelöst. Bevorzugte Ausgestaltungen der Erfindung sind Gegenstand der abhängigen Ansprüche.

Es wird also vorgeschlagen, den Schleifvorgang nicht mehr hinter dem Förderkanal bzw. unter dem daran anschließenden Maschinenboden auszuführen, sondern an die Seite der Erntemaschine zu verlegen, wo der verfügbare Platz weniger beschränkt ist. Die Schleifvorrichtung wird am seitlichen Maschinenrand bereitgehalten und die Messer zu der dort bereitgehaltenen Schleifvorrichtung verfahren. Erfindungsgemäß ist die Schleifvorrichtung in einem seitlichen Randbereich der Erntemaschine angeordnet, wobei die Messer der Schneidvorrichtung quer zur Förderrichtung des Förderkanals in eine Schleifposition in den genannten seitlichen Randbereich hinein verfahrbar gelagert sind. Hierdurch wird unmittelbar hinter dem Förderkanal bzw. unter dem Maschinenboden bzw. dem Chassis kein Arbeitsraum für die Schleifvorrichtung benötigt, so dass der entsprechende Bauraum für die Anordnung anderer Maschinenkomponenten wie Sensoren, Stellmotoren, Wartungsklappen und dergleichen genutzt werden kann bzw. ein Schleifvorgang an der Erntemaschine auch bei Maschinentypen ermöglicht wird, die im genannten Bereich hinter dem Förderkanal bzw. unter dem Chassisboden keinen Bauraum für die Schleifvorrichtung zur Verfügung haben.

In Weiterbildung der Erfindung ist die zumindest eine Schleifvorrichtung in Fahrtrichtung der Maschine betrachtet bzw. in Förderrichtung durch den Förderkanal betrachtet seitlich neben dem Förderkanal und/oder seitlich neben dem an den Förderkanal anschließenden Maschinen- bzw. Chassisabschnitt angeordnet. Die Schleifvorrichtung kann über die Breite des Förderkanals bzw. des daran anschließenden Maschinenabschnitts seitlich vorspringen, da dort der zur Verfügung stehende Bauraum üblicherweise nicht so stark beschränkt ist wie hinter dem Förderkanal bzw. unter dem Maschinenboden. Soweit eine maximale Straßentransportbreite einzuhalten ist, kann die Schleifvorrichtung ggf. in eine Ruhestellung unter den Maschinenboden und/oder hinter den Förderkanal gefahren werden, was den genannten Bauraumvorteil nicht schwinden lässt, da in der Ruhestellung der Schleifvorrichtung die Messer der Schneidvorrichtung in ihrer Arbeitsstellung zumindest teilweise innerhalb des Förderkanals untergebracht sind und somit nicht Platz gleichzeitig für die Messer und die Schleifvorrichtung vorgesehen sein muss. In der Arbeitsstellung ist die Schleifvorrichtung hingegen vorteilhafterweise seitlich neben dem Förderkanal bzw. dem daran anschließenden Maschinen- oder Chassisteil seitlich überstehend angeordnet, so dass hinter dem Förderkanal bzw. unter dem Maschinen- oder Chassisteil nur Platz für das Herausfahren der Messer benötigt wird.

Insbesondere kann die Schleifvorrichtung seitlich neben dem Förderkanal bzw. anschließenden Chassisteil höher angeordnet sein als bislang üblich, da sie nicht unter den Maschinenboden passen muss. Beispielsweise kann die Schleifvorrichtung mit zumindest einem Teil ihrer Aufhängung oder einem Teil ihres Antriebs oberhalb des Maschinenbodens und/oder oberhalb des Förderkanals angeordnet sein.

Erfindungsgemäß sind zwei Schleifvorrichtungen auf gegenüberliegenden Seiten der Erntemaschine, insbesondere seitlich rechts und links vom Förderkanal bzw. dem daran anschließenden Maschinen- bzw. Chassisteil angeordnet, so dass die Messer sowohl auf der einen Seite als auch auf der anderen Seite zeitparallel bzw. zumindest zeitlich überlappend geschliffen werden können, so dass die benötigte Zeit für den Schleifvorgang deutlich reduziert wird.

Hierbei kann ein Teil der Messer auf die eine Seite der Erntemaschine herausgefahren werden, während ein anderer Teil der Messer auf die gegenüberliegende Seite herausgefahren werden kann. Vorteilhafterweise kann dies mittels eines geteilten, vorzugsweise balkenförmigen Messerträgers bewerkstelligt werden, an dem die Messer der Schneidvorrichtung in an sich bekannter Weise gelagert sind. Der genannte Messerträger umfasst vorteilhafterweise zwei Trägerteile, von denen eines auf die eine Seite der Erntemaschine und das andere auf die andere Seite der Erntemaschine seitlich herausgefahren werden kann. Von der vorgenannten Zeitersparnis durch zeitparalleles Schleifen mehrerer Messer kann hierdurch der an der Seite der Erntemaschine benötigte Platzbedarf deutlich reduziert werden, da nicht der gesamte Messerträger mit seiner beträchtlichen Länge auf eine Seite der Erntemaschine herausgefahren werden muss, sondern zu gegenüberliegenden Seiten hin jeweils nur die halbe Länge. Bevorzugt ist es hierbei, den Messerträger hälftig in zwei Teile zu unterteilen, wobei jedoch ggf. auch eine Unterteilung in mehr als zwei Abschnitte vorgesehen sein kann, um weiteren Platz zu sparen. Beispielsweise kann ein dreiteiliger Messerbalken vorgesehen sein, dessen Teile zu jeweils einer Seite der Erntemaschine herausgefahren werden können, wodurch der benötigte Platz für den Schleifvorgang weiter reduziert wird. Bevorzugt ist jedoch eine zweiteilige Messerbalkenausbildung, da hierbei die Ausbildung der beweglichen Lagerung für den Messerbalken vereinfacht und eine ausreichende Beschleunigung des Schleifvorgangs erreicht wird.

Die bewegliche Lagerung des vorzugsweise balkenförmigen Messerträgers bzw. dessen Trägerabschnitte kann grundsätzlich verschieden ausgebildet sein. Das seitliche Herausfahren quer zur Fahrtrichtung der Erntemaschine bzw. quer zu einer vertikalen Ebene, die die Förderrichtung durch den Förderkanal enthält, kann nach einer vorteilhaften Ausführung der Erfindung mittels einer Schiebeführung bewerkstelligt sein, durch die der Messerträger seitlich unter der Erntemaschine zu deren seitlichen Randbereich herausschiebbar ist. Alternativ oder zusätzlich kann der Messerträger bzw. der entsprechende Trägerabschnitt mittels einer Lenkeranordnung, beispielsweise in Form einer Viergelenks-Lenkeranordnung, seitlich herausgefahren werden.

Vorteilhafterweise umfasst die bewegliche Lagerung des balkenförmigen Messerträgers bzw. dessen Trägerabschnitte mehrere Freiheitsgrade bzw. mehrere Beweglichkeiten. Um die Messer zunächst aus dem Förderkanal herausfahren zu können, kann die bewegliche Lagerung einen ersten Verfahrweg für die Messer vorsehen, der in einer aufrechten, die Förderrichtung des Förderkanals enthaltenden Bewegungsebene verläuft. Insbesondere können die Messer zunächst nach hinten und/oder unten aus dem Förderkanal herausgefahren, insbesondere um eine liegende Querachse herausgeschwenkt werden. Sind die Messer aus dem Förderkanal herausgefahren, kann der Messerträger zusammen mit den daran gelagerten Messern quer zu der genannten aufrechten Bewegungsebene seitlich in den Randbereich herausgefahren werden, in dem die Schleifvorrichtung angeordnet ist.

Die Schleifvorrichtung kann in dem besagten seitlichen Randbereich stationär angeordnet sein, wobei stationär nicht zwangsweise völlig unbeweglich bedeuten muss, sondern eine Unbeweglichkeit bzw. beschränkte Beweglichkeit quer zur Fahrtrichtung und/oder quer zur Ebene der Messer in deren Arbeitsstellung seitlich neben dem Maschinenkorpus meinen kann. Um die zum Schleifen bzw. Schärfen notwendige Relativbewegung zwischen Schleifer und Messer zu erzeugen, insbesondere das Entlangfahren des Schleifers an der Schneide zu erzeugen, kann die Schleifvorrichtung in dem genannten seitlichen Randbereich derart beweglich gelagert sein, dass der Schleifer an der Messerschneide entlang fahrbar ist. Dies kann beispielsweise durch eine pendelnde Aufhängung des Schleifers und/oder eine Schiebeführung zur verschieblichen Lagerung des Schleifers bewerkstelligt werden, wobei im Falle einer Schiebeführung eine vorzugsweise kulissenförmige Bewegungsbahn vorgegeben sein kann, die den Schleifer entsprechend dem Verlauf der Messerschneide folgen lässt. Zusätzlich kann die Schleifvorrichtung auch eine begrenzte Beweglichkeit quer zur Messerschneide haben, um eine entsprechende Anstell- bzw. Andruckbewegung erzeugen zu können, beispielsweise durch eine Federvorspannung, so dass der Schleifer mit entsprechender Andruckkraft seitlich gegen die Messerschneide zum Schleifen gedrückt wird. Durch eine solche begrenzte Beweglichkeit kann sichergestellt sein, dass der Schleifer auch bei Verformungen der Schneide dem Schneidenverlauf folgen kann.

Soweit zuvor ausgeführt ist, dass die Schleifvorrichtung stationär angeordnet sein kann, meint dies zumindest jedoch, dass die Schleifvorrichtung zumindest in ihrer Arbeitsstellung bzw. in ihrem Arbeitsbetrieb nicht unter den Maschinenboden bzw. hinter den Förderkanal fahrbar ist. Der Schleifvorgang findet vorteilhafterweise seitlich neben dem Maschinenkorpus statt.

Alternativ oder zusätzlich zu der zuvor beschriebenen Beweglichkeit der Schleifvorrichtung kann die Relativbewegung zwischen Schleifvorrichtung und Messer jedoch auch dadurch erzeugt werden, dass die Messer in ihrer Schleifstellung bzw. der die Messer tragenden Messerträger in entsprechender Weise beweglich gelagert ist, um die erforderliche Kinematik für den Schleifvorgang zu erzeugen. Insbesondere kann der seitlich herausgefahrene Messerträger beispielsweise mittels einer Schiebeführung und/oder mittels einer Lenkeraufhängung relativ zur Schleifvorrichtung derart bewegt werden, dass der Schleifer an der Messerschneide entlang fährt. Um den für die Beweglichkeit des Messerträgers benötigten Bauraum jedoch zu verringern, ist die vorgenannte Ausbildung bevorzugt, gemäß der die Schleifvorrichtung in dem seitlichen Randbereich soweit beweglich gelagert ist, dass die Schleifvorrichtung zumindest teilweise die Schleifbewegung, insbesondere das Entlangfahren an der Messerschneide ausführt.

Je nachdem wie viele Messer zu schleifen sind und/oder wie viele Messer die Schleifvorrichtung gleichzeitig schleifen kann, beispielsweise durch mehrere, parallel zueinander angeordnete und entsprechend dem Messerabstand beabstandete Schleifkörper, kann nach Abschluss eines Schleifvorgangs eines Messers oder einer Messergruppe das seitliche Weitersetzen der Schleifvorrichtung relativ zu den Messern, d.h. das Anfahren der nächsten zu schleifenden Messer, entweder durch seitliches Verfahren des Messerträgers und/oder durch seitliches Verfahren der Schleifvorrichtung erreicht werden. Wird beispielsweise jeweils nur ein Messer geschliffen, kann beispielsweise der Messerträger nach Beendigung des Schleifens eines Messers ein dem Messerabstand entsprechendes Stück weiter gefahren werden, so dass der Schleifer das nächste Messer schleifen kann. In diesem Fall braucht die Schleifvorrichtung quer zu der Messerschneide nicht verfahrbar gelagert werden, wobei jedoch dennoch eine begrenzte Querbeweglichkeit für die Schleifvorrichtung vorgesehen sein kann, um in der vorgenannten Weise eine Vorspannkraft vorsehen zu können und ein Ausweichen der Schleifvorrichtung bei seitlich verformten Schneiden zu ermöglichen.

Alternativ oder zusätzlich kann das Anfahren der nächsten zu schleifenden Messer jedoch auch durch eine Querbeweglichkeit der Schleifvorrichtung erzielt werden. In diesem Fall kann der Messerträger bzw. der entsprechende Abschnitt des Messerträgers vollständig seitlich neben den Maschinenkorpus herausgefahren werden, so dass er in der Folge für den Schleifvorgang nicht weiter seitlich bewegt werden muss. Die Schleifvorrichtung fährt dann in an sich bekannter Weise von Messer zu Messer, um die entsprechenden Messer zu schleifen, wobei durch die seitliche Anordnung der Schleifvorrichtung dieses Querverfahren der Schleifvorrichtung jedoch gänzlich neben dem Maschinenkorpus erfolgt. Beispielsweise kann hierzu die Schleifvorrichtung an einer Quertraverse verschieblich geführt sein, die in Arbeitsstellung seitlich vom Maschinenkorpus auskragt. Um in der Ruhestellung den seitlichen Überstand zu reduzieren, kann die genannte Quertraverse beispielsweise weggeklappt werden, insbesondere in eine an den Maschinenkorpus näherungsweise anliegende Ruhestellung.

Die Erfindung wird nachfolgend anhand bevorzugter Ausführungsformen und zugehöriger Zeichnungen näher erläutert. In den Zeichnungen zeigen:

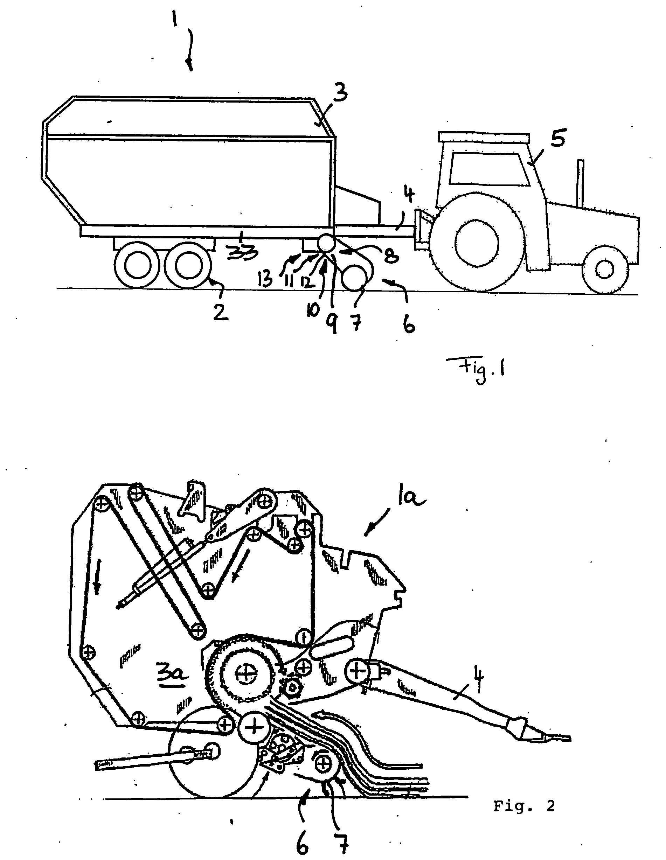

- Fig. 1:: eine schematische Seitenansicht einer Erntemaschine in Form eines Ladewagens nach einer vorteilhaften Ausführung der Erfindung, der eine Aufnahmevorrichtung in Form einer Pickup, eine Schneidvorrichtung mit einem Messerbalken und eine seitlich am Ladewagen angeordnete Schleifvorrichtung zum Schleifen der Messer aufweist,
- Fig. 2:: eine schematische Seitenansicht einer Erntemaschine in Form einer Ballenpresse nach einer vorteilhaften Ausführung der Erfindung, der eine Aufnahmevorrichtung in Form einer Pickup, eine Schneidvorrichtung mit einem Messerbalken und eine seitlich an der Ballenpresse angeordnete Schleifvorrichtung zum Schleifen der Messer aufweist,

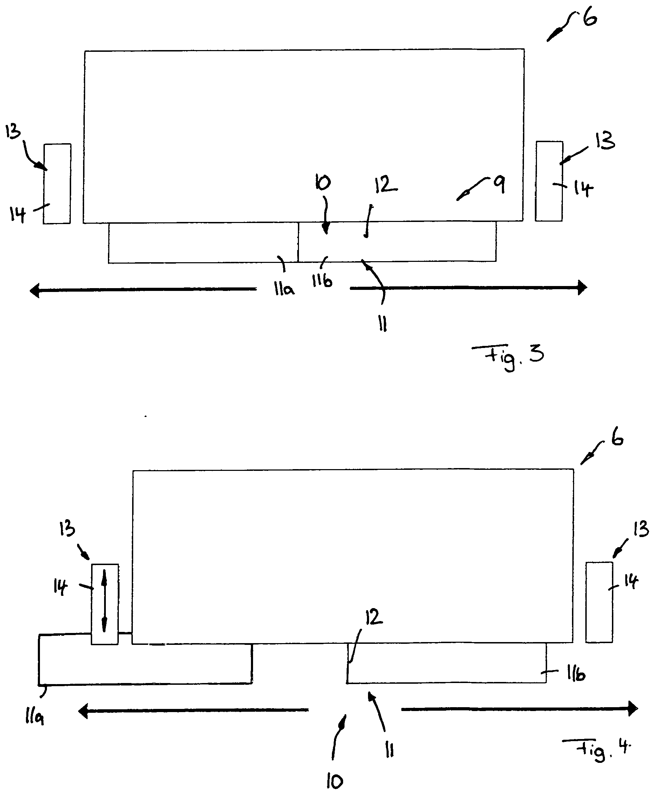

- Fig. 3:: eine schematische Draufsicht auf die Aufnahmevorrichtung und den daran anschließenden Förderkanal der Erntemaschine aus den vorhergehenden Figuren 1 und 2, die die seitliche Anordnung zweier Schleifvorrichtungen und die Herausfahrbarkeit des geteilten Messerbalkens zu gegenüberliegenden Seiten hin zeigt,
- Fig. 4:: eine schematische Draufsicht auf die Aufnahmevorrichtung, die Schneidvorrichtungen und den Messerbalken ähnlich Fig. 3, wobei einer der Abschnitte des Messerträgers in eine Schleifstellung seitlich herausgefahren ist und die Schleifvorrichtung eines der an dem Messerträger befestigten Messer schleift,

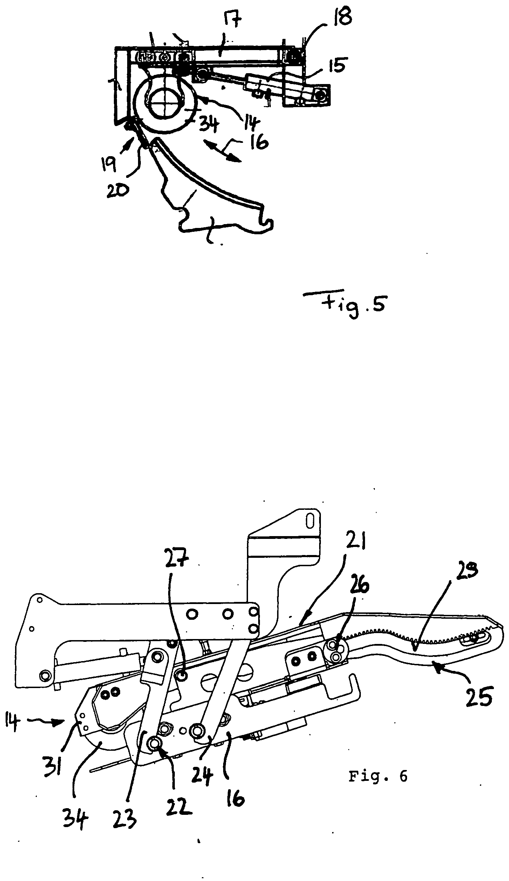

- Fig. 5:: eine schematische Seitenansicht einer der Schleifvorrichtungen aus den vorhergehenden Figuren 3 und 4 nach einer Ausführung der Erfindung, gemäß der der Schleifer pendelnd an einer Schwinge aufgehängt ist, um an der Messerschneide entlang zu fahren, und
- Fig. 6:: eine schematische Seitenansicht einer der Schneidvorrichtungen aus den Figuren 3 und 4 nach einer weiteren vorteilhaften Ausführung der Erfindung, gemäß der der Schleifer auf einem in einer Kulissenführung geführten Längsschlitten montiert ist, um den Schleifer an der Messerschneide entlangfahren zu können.

Der in Fig. 1 gezeigte Ladewagen 1 umfasst in an sich bekannter Weise ein Fahrwerk 2, das einen Maschinenrahmen 33 trägt, der über eine Deichsel 4 an einen Schlepper 5 anbaubar ist. Der Maschinenrahmen 33 trägt einen Erntegutspeicher 3, der an seinem vorderen Ende durch eine Aufnahmevorrichtung 6 mit Erntegut beladbar ist, das von der Aufnahmevorrichtung 6 vom Boden aufgenommen wird.

Die genannte Aufnahmevorrichtung 6 umfasst hierbei in der gezeichneten Ausführung eine um eine liegende Querachse rotatorisch antreibbare Stachelwalze 7, die das Erntegut vom Boden aufnimmt und an einen ebenfalls um eine liegende Querachse antreibbaren Förderrotor 8 übergibt, der das Erntegut durch einen Förderkanal 9 hindurch in den genannten Erntegutspeicher 3 fördert.

An dem Förderkanal 9 ist eine Schneidvorrichtung 10 vorgesehen, die einen liegend quer angeordneten Messerbalken 11 umfasst, der eine Vielzahl von in Reihe nebeneinander angeordneten Messern 12 trägt, die von unten her durch den Boden des genannten Förderkanals 9 hindurchtreten und in den Förderkanal 9 hineinragen, so dass das durch den Förderrotor 8 durch den Förderkanal 9 hindurch geförderte Erntegut geschnitten wird.

Während Fig. 1 einen Ladewagen 1 zeigt, kann die Schleifvorrichtung 13 in vorteilhafter Weise auch bei einer Presse 1 a Verwendung finden, wie sie Fig. 2 zeigt. Die Aufnahmevorrichtung 6 der Presse 1 a ist entsprechend der des Ladewagens 1 ausgebildet, so dass auf die vorangehende Beschreibung verwiesen wird. Lediglich wird das Erntegut nicht in einen Erntegutspeicher 3, sondern stattdessen in eine Pressenkammer 3a gefördert. Im Übrigen kann auf die vorausgehende Beschreibung verwiesen werden.

Um die genannten Messer 12 schleifen oder auch warten und austauschen zu können, kann der Messerbalken 11 zunächst in einem ersten Bewegungsschritt abgesenkt werden, so dass die Messer 12 außerhalb des Förderkanals 9 im Wesentlichen unterhalb des Bodens des Förderkanals 9 und unterhalb des Bodens des Erntegutspeichers 3 zu liegen kommen. In einem zweiten Bewegungsschritt kann der genannte Messerbalken sodann im Wesentlichen parallel zur Längsachse des Messerbalkens und damit quer zur Fahrtrichtung des Ladewagens 1 seitlich in eine Schleifposition herausgefahren werden, so dass zumindest das jeweils zu schleifende Messer 12 seitlich neben dem Korpus des Ladewagens 1 bzw. seitlich der Aufnahmevorrichtung 3 und des daran anschließenden Förderkanals 9 zu liegen kommt. Um den ersten Bewegungsschritt ausführen zu können, kann der Messerbalken 12 beispielsweise um eine liegende Querachse heruntergeklappt bzw. -geschwenkt werden. Um den genannten zweiten Bewegungsschritt ausführen zu können, kann beispielsweise eine in Fig. 3 angedeutete Schiebeführung vorgesehen sein, die entsprechend den Bewegungspfeilen und eine Bewegungsrichtung in einer liegenden Ebene quer zur Fahrtrichtung besitzt, so dass der Messerbalken 11 seitlich herausgeschoben werden kann.

Vorteilhafterweise kann der genannte Messerträger 11, wie die Figuren 3 und 4 zeigen, in zwei Trägerabschnitte 11a und 11b unterteilt sein, so dass ein erster Trägerabschnitt 11a nach links und ein zweiter Trägerabschnitt 11b nach rechts, d.h. zu gegenüberliegenden Seiten des Korpus des Ladewagens 1 herausgefahren werden kann. Die Schiebeführung ist hier entsprechend geteilt ausgebildet. Wie die Figuren 3 und 4 zeigen, sind zum Schleifen der Messer 12 zwei Schleifvorrichtungen 13 auf gegenüberliegenden Seiten des Ladewagenkorpus vorgesehen, die jeweils in einem seitlichen Randbereich neben dem Förderkanal 9 und/oder neben dem daran anschließenden Korpus- bzw. Chassisabschnitt angeordnet sind. Die Schleifvorrichtungen 13 können dabei im eigentlichen Sinne schleifend, d.h. mit Materialabtrag arbeiten, aber auch durch Materialumformung bzw. -verdrängung arbeitend ausgebildet sein, um die Schneide der Messer 12 zu schärfen. In der gezeichneten Ausführungsform umfasst jede Schleifvorrichtung 13 einen Schleifer 14 mit einer um eine liegende Querachse rotierenden Schleifscheibe 34, der entlang der Schneide eines jeweiligen Messers 12 verfahren werden kann, um die jeweilige Schneide zu schleifen. Um von Messer zu Messer verfahren werden zu können, kann der Messerbalken 11 Stück für Stück weiter seitlich herausgefahren werden, wie dies Fig. 4 andeutet. Alternativ oder zusätzlich kann der jeweilige Schleifer 14 jedoch auch entlang einer zum Messerbalken 11 parallelen Traverse quer verfahren werden. Ohne in den Zeichnungen eigens gezeigt zu sein, könnte jede Schleifvorrichtung 13 auch mehrere Schleifer 14 nebeneinander oder jeder Schleifer 14 mehrere Schleifscheiben 34 nebeneinander besitzen, um mehrere Messer 12 parallel zueinander zu schleifen.

Der Schleifer 14 kann hierbei einen Antrieb zum Antreiben der Schleifscheibe 34 in Form eines vorzugsweise drehzahlsteuerbaren Motors, insbesondere eines Elektromotors oder eines Hydromotors besitzen.

Wie Fig. 5 zeigt, kann jeder Schleifer 14 pendelnd aufgehängt sein, um entlang der Messerschneide verfahren werden zu können. Gemäß Fig. 5 ist hierbei dem Schleifer 14 ein Längsantrieb 15 in Form eines Schwenkantriebs zugeordnet, mit Hilfe dessen der Schleifer 14 pendelnd entlang der Schneide des jeweiligen Messers 12 hin und her gefahren werden kann, wie dies der Pfeil 16 in Fig. 5 verdeutlicht. Der Schleifer 14 ist hierbei an einer Schwinge 17 aufgehängt, die um eine zur Längsachse der Messerträger 11 parallele Schwenkachse 18 schwenkbar gelagert ist, wobei vorteilhafterweise die genannte Schwenkachse 18 relativ zu dem in Schleifposition befindlichen Messer 12 derart positioniert ist, dass die Schwenkachse 18 mit dem Krümmungsmittelpunkt der Schneide des Messers 12 zusammenfällt, vgl. Fig. 5.

Wie Fig. 5 weiterhin zeigt, kann die Schleifvorrichtung 13 weiterhin eine Messerfixierung 19 beispielsweise in Form eines Messerkamms 20 umfassen, der auf der Schwinge 17 sitzen kann. Der genannte Messerkamm 20 fährt auf die zu schleifenden Messer 12, so dass diese seitlich nicht ausweichen können.

Alternativ zu der pendelnden Schleiferaufhängung nach Fig. 5 kann die Längsbewegung des Schleifers 14 entlang der Schneide der Messer 12 auch durch eine Schlittenführung erreicht werden, die in Fig. 6 gezeigt ist. Wie Fig. 6 zeigt, kann ein Längsschlitten 21 mittels einer Längsführung 25 verschieblich gelagert sein. Die genannte Längsführung 25 ist hierbei nicht als gerade Linearführung ausgebildet, sondern realisiert eine von einer Geraden abweichende Stellbewegungsbahn, die grundsätzlich in verschiedener Weise ausgebildet, insbesondere bogenförmig gekrümmt, geknickt oder ggf. auch abschnittsweise gerade ausgebildet sein kann und an den Verlauf der Schneide der Messer 12 angepasst ist. Genauer gesagt ist die Längsführung 25 derart geformt, dass der an dem Längsschlitten 21 befestigte Schleifer 14 mit seiner Schleifscheibe 34 eine dem Verlauf der Schneide der Messer 12 folgende Bahn abfährt.

In der gezeichneten Ausführung nach Fig. 6 kann hierbei ein Schlittenträger 22 mittels einer Hubvorrichtung abgesenkt und angehoben werden, so dass der Schleifer 14 von oben her auf die zu schleifenden Messer 12 gesetzt werden kann. Der genannte Schlittenträger 22 kann insbesondere mittels zweier Lenker 23 und 24 verfahrbar sein, die jeweils um liegende Querachsen schwenkbar angelenkt sind. Die genannten Lenker 23 und 24 können näherungsweise parallel zueinander angeordnet und näherungsweise gleich lang ausgebildet sein, so dass sie näherungsweise eine Parallelogrammlenkerführung bilden.

Ist der Schleifer 14 durch die Hubvorrichtung auf das Messer gesetzt, wird der Längsschlitten 21 in der Längsführung 25 verfahren. In der gezeichneten Ausführung umfasst die genannte Längsführung 25 hierbei zwei kulissenartige Führungskonturen 29, die in der gezeichneten Ausführung in Form von Längsnuten an dem Längsschlitten 21 ausgebildet sind. Genauer gesagt sind rechts und links an dem Längsschlitten 21 jeweils ein Paar vordere Führungskonturen und ein Paar hintere Führungskonturen 29 vorgesehen, in denen Anlenkpunkte 26 und 27 laufen, die an dem genannten Schlittenträger 22 ortsfest befestigt sind.

Zum Verfahren des Längsschlittens 21 ist ein Längsschlittenantrieb vorgesehen, der grundsätzlich verschieden ausgebildet sein kann, beispielsweise einen Druckmittelzylinder umfassen kann. Alternativ oder zusätzlich kann auch ein Hydraulikmotor oder ein Elektromotor vorgesehen sein, der ein Ritzel antreibt, welches mit einer sich entlang einer der Führungskonturen erstreckenden Zahnstange kämmt. Damit ergibt sich folgende Funktion: Zum Schleifen der Messer wird zunächst der Messerbalken 11 abgesenkt, um die Messer aus dem Förderkanal 9 herauszufahren. Sodann werden die beiden Hälften des Messerträgers 11 a und 11 b seitlich unter dem Boden der Erntemaschine herausgefahren, so dass ein jeweils zu schleifendes Messer in eine Schleifposition seitlich neben dem Maschinenkorpus zu liegen kommt. Sodann wird der Schleifer 14 der jeweiligen Schleifvorrichtung 13 auf die Messerschneide gefahren, um entlang der Schneide an dem Messer hin und her zu fahren und dieses zu schleifen. Ist ein jeweiliges Messer oder eine jeweilige Gruppe von Messern, die gleichzeitig geschliffen werden, fertig geschliffen, fährt der Messerträger bzw. das jeweilige Trägerteil 11a oder 11b ein Stück weiter seitlich heraus, so dass das nächste Messer bzw. die nächste Messergruppe geschliffen werden kann.

Alternativ kann der Messerträger 11 bzw. der jeweilige Trägerteil 11a oder 11b auch gleich ganz seitlich herausgefahren werden. In diesem Fall kann die jeweilige Schleifvorrichtung 13 parallel zur Längsrichtung des Messerträgers quer verfahren werden, um nach dem Schleifen eines Messers bzw. einer Messergruppe zum nächsten Messer bzw. zur nächsten Messergruppe gefahren zu werden. Hierzu kann bei der Ausführung nach Fig. 5 die dort gezeigte Schwinge 17 auf einer Quertraverse verfahrbar sein. Bei der Ausführung nach Fig. 6 kann der genannten Längsschlitten 21 auf einem Querschlitten entsprechend quer verfahrbar gelagert sein. In jedem Fall findet der Schleifvorgang jedoch vorteilhafterweise seitlich neben dem Korpus der Erntemaschine statt.

## Patentansprüche

1. Erntemaschine, insbesondere in Form eines Ladewagens (1) oder einer Ballenpresse, (1a) mit einer Aufnahmevorrichtung (6) zum Aufnehmen von Erntegut vom Boden, einem an die Aufnahmevorrichtung (6) anschließenden Förderkanal (9), der in einen Erntegutspeicher (3) und/oder eine Verarbeitungskammer wie beispielsweise Pressenkammer (3a) führt, einer Schneidvorrichtung (10) mit mehreren Messern (12) zum Zerschneiden des durch den Förderkanal (9) geförderten Ernteguts, sowie zumindest einer Schleifvorrichtung (13) zum Schleifen der Messer (12) in einem seitlichen Randbereich der Erntemaschine, wobei die Messer (12) der Schneidvorrichtung (10) quer zur Förderrichtung des Förderkanals (9) in eine Schleifposition in den genannten seitlichen Randbereich hinein verfahrbar gelagert sind, **dadurch gekennzeichnet, dass** zwei Schleifvorrichtungen (13) auf gegenüberliegenden Seiten der Erntemaschine in jeweils einem seitlichen Randbereich der Erntemaschine angeordnet sind, wobei eine erste Gruppe von Messern (12) auf eine erste Seite und eine zweite Gruppe der Messer auf die gegenüberliegende zweite Seite der Erntemaschine herausfahrbar gelagert sind und mehrere Messer (12) zeitparallel schleifbar sind.

2. Erntemaschine nach dem vorhergehenden Anspruch, wobei der seitliche Randbereich in Fahrtrichtung der Erntemaschine betrachtet rechts und links neben dem Förderkanal (9) und/oder einem daran anschließenden Maschinenkorpus- oder Chassisabschnitt liegt.

3. Erntemaschine nach einem der vorhergehenden Ansprüche, wobei die Messer (12) auf einem balkenförmigen Messerträger (11) angeordnet sind, der durch eine bewegliche Lagerung unter dem Förderkanal (9) und/oder unter dem Maschinenboden seitlich heraus in genannten Randbereich verfahrbar gelagert ist.

4. Erntemaschine nach dem vorhergehenden Anspruch, wobei der Messerträger (11) in zumindest zwei Messerträgerabschnitte (11a, 11b) unterteilt ist, wobei die Messerträgerabschnitte (11a und 11b) zu gegenüberliegenden Seiten der Erntemaschine herausfahrbar gelagert sind.

5. Erntemaschine nach einem der beiden vorhergehenden Ansprüche, wobei die bewegliche Lagerung des Messerträgers (11) einen ersten Verfahrweg zum Herausfahren der Messer (12) aus dem Förderkanal (9) in eine aufrechte, die Förderrichtung des Förderkanals (9) enthaltende Bewegungsebene und einen zweiten Verfahrweg quer zur genannten Bewegungsebene zum Herausfahren des Messerträgers (11) in den seitlichen Randbereich aufweist.

6. Erntemaschine nach dem vorhergehenden Anspruch, wobei die bewegliche Lagerung eine vorzugsweise lineare Schiebeführung (50) zur verschieblichen Führung des Messerträgers (11) entlang des zweiten Verfahrwegs sowie eine Schwenklagerung zum Herausschwenken der Messer (12) aus dem Förderkanal (9) entlang des ersten Verfahrwegs aufweist.

7. Erntemaschine nach einem der vorhergehenden Ansprüche, wobei die Schleifvorrichtungen (13) in ihrer Arbeitsposition quer zur Fahrtrichtung und/oder quer zur Ebene der Messer (12) stationär gehalten sind und zum Weitersetzen der Schleifvorrichtungen (13) auf ein nächstes zu schleifendes Messer (12) die Messer (12) oder eine Gruppe der Messer (12) quer verfahrbar ist.

8. Erntemaschine nach einem der vorhergehenden Ansprüche, wobei die Messer (12) in ihrer Schleifposition stationär gehalten sind und zum Weitersetzen der Schleifvorrichtungen (13) auf ein nächstes zu schleifendes Messer die Schleifvorrichtungen (13) quer zu den Messern (12) verfahrbar gelagert sind.

9. Erntemaschine nach einem der vorhergehenden Ansprüche, wobei die Schleifvorrichtungen (13) jeweils mittels einer Längsführung (25) und/oder einer pendelnden Lenkeraufhängung beweglich entlang der Schneide der Messer (12) gelagert sind.

10. Erntemaschine nach einem der vorhergehenden Ansprüche, wobei der Messerträger (11) entlang der Schneiden der Messer (12) mittels einer Schiebeführung und/oder einer pendelnden Lenkeraufhängung beweglich gelagert ist, um die Schleifvorrichtung (13) entlang der Schneide der Messer relativ zu den Messern (12) zu verfahren.

## Claims

1. A harvesting machine, in particular in the form of a self-loading wagon (1) or a baling press (1a), comprising a pick-up device (6) for picking up crops from the ground, a conveying channel (9) adjoining the pick-up device (6), which leads into a crop storage tank (3) and/or a processing chamber such as a press chamber (3a), a cutting device (10) with a plurality of knives (12) for cutting the crops conveyed through the conveying channel (9), and at least one grinding device (13) for grinding the knives (12) in a lateral edge region of the harvesting machine, wherein the knives (12) of the cutting device (10) are mounted so as to be movable into a grinding position in said lateral edge region transversely to the conveying direction of the conveying channel (9), **characterized in that** two grinding devices (13) are arranged on opposite sides of the harvesting machine each in a lateral edge region of the harvesting machine, wherein a first group of knives (12) is mounted so as to be extendable onto a first side and a second group of the knives is mounted so as to be extendable onto the opposite second side of the harvesting machine and several knives (12) can be ground at the same time.

2. The harvesting machine according to the preceding claim, wherein the lateral edge region is located to the right and left of the conveying channel (9) and/or an adjoining machine body or chassis portion as seen in direction of travel of the harvesting machine.

3. The harvesting machine according to any of the preceding claims, wherein the knives (12) are arranged on a beam-shaped knife carrier (11) which by movable mounting under the conveying channel (9) and/or under the machine base is mounted so as to be movable out of the side into said edge region.

4. The harvesting machine according to the preceding claim, wherein the knife carrier (11) is divided into at least two knife carrier portions (11a, 11b), wherein the knife carrier portions (11a and 11b) are mounted so as to be extendable towards opposite sides of the harvesting machine.

5. The harvesting machine according to any of the preceding claims, wherein the movable mounting of the knife carrier (11) includes a first travel path for extending the knives (12) out of the conveying channel (9) into an upright plane of movement containing the conveying direction of the conveying channel (9) and a second travel path transversely to said plane of movement for extending the knife carrier (11) into the lateral edge region.

6. The harvesting machine according to the preceding claim, wherein the movable mounting includes a preferably linear sliding guideway (50) for shiftably guiding the knife carrier (11) along the second travel path and a swivel bearing for swiveling the knives (12) out of the conveying channel (9) along the first travel path.

7. The harvesting machine according to any of the preceding claims, wherein in their working position the grinding devices (13) are kept stationary transversely to the direction of travel and/or transversely to the plane of the knives (12) and to place the grinding devices (13) onto a next knife (12) to be ground the knives (12) or a group of the knives (12) is(are) transversely movable.

8. The harvesting machine according to any of the preceding claims, wherein the knives (12) are kept stationary in their grinding position and to place the grinding devices (13) onto a next knife to be ground, the grinding devices (13) are movably mounted transversely to the knives (12).

9. The harvesting machine according to any of the preceding claims, wherein the grinding devices (13) each are movably mounted along the cutting edge of the knives (12) by means of a longitudinal guide (25) and/or an oscillating handlebar suspension.

10. The harvesting machine according to any of the preceding claims, wherein the knife carrier (11) is movably mounted along the cutting edges of the knives (12) by means of a sliding guideway and/or an oscillating handlebar suspension, in order to move the grinding device (13) along the cutting edge of the knives relative to the knives (12).

## Revendications

1. Machine de récolte, en particulier sous forme d'une remorque autochargeuse (1) ou d'une presse à balles (1a), comportant un dispositif de ramassage (6) pour ramasser des récoltes du sol, un canal de transport (9) suivant le dispositif de ramassage (6), qui débouche dans un réservoir de stockage de récoltes (3) et/ou une chambre de traitement telle qu'une chambre de presse (3a), un dispositif de coupe (10) avec plusieurs couteaux (12) pour couper les récoltes transportées dans le canal de transport (9), ainsi qu'au moins un dispositif de meulage (13) pour meuler les couteaux (12) dans une zone de bord latéral de la machine de récolte, les couteaux (12) du dispositif de coupe (10) étant montés de manière à pouvoir se déplacer dans une position de meulage dans ledit zone de bord latéral, **caractérisée en ce que** deux dispositifs de meulage (13) sont agencés sur des côtés opposées de la machine de récolte chacun dans une zone de bord latéral de la machine de récolte, un premier groupe de couteaux (12) étant monté de manière extensible sur un premier côté et un deuxième groupe des couteaux étant monté de manière extensible sur le deuxième côté opposé de la machine de récolte et plusieurs couteaux (12) peuvent être meulés en même temps.

2. Machine de récolte selon la revendication précédente, dans laquelle la zone de bord latérale est située à droite et à gauche du canal de transport (9) et/ou d'un corps de machine ou d'une partie de châssis adjacent(e) vue dans la direction de course de la machine de récolte.

3. Machine de récolte selon l'une quelconque des revendications précédentes, dans laquelle les couteaux (12) sont agencés sur un porte-couteau (11) en forme de barre, qui par un montage mobile sous le canal de transport (9) et/ou sous la base de machine est monté de manière à pouvoir se déplacer hors du côté dans ladite zone de bord.

4. Machine de récolte selon la revendication précédente, dans laquelle la porte-couteau (11) est divisée en au moins deux parties de porte-couteau (11a, 11b), les parties de porte-couteau (11a et 11b) étant montées de manière extensible vers les côtés opposées de la machine de récolte.

5. Machine de récolte selon l'une des deux revendications précédentes, dans laquelle le montage mobile du porte-couteau (11) comprend un premier trajectoire de déplacement pour étendre les couteaux (12) hors du canal de transport (9) dans un plan de mouvement vertical contenant la direction de transport du canal de transport (9) et un deuxième trajectoire de déplacement en travers dudit plan de mouvement pour étendre le porte-couteau (11) dans la zone de bord latéral.

6. Machine de récolte selon la revendication précédente, dans laquelle le montage mobile comprend un guide coulissant (50) de préférence linéaire pour le guidage coulissant du porte-couteau (11) le long du deuxième trajectoire de déplacement ainsi qu'un palier pivotant pour faire pivoter les couteaux (12) hors du canal de transport (9) le long du premier trajectoire de déplacement.

7. Machine de récolte selon l'une quelconque des revendications précédentes, dans laquelle les dispositifs de meulage (13) sont maintenus fixes dans leur position de travail transversalement à la direction de déplacement et/ou transversalement au plan des couteaux (12) et pour placer les dispositifs de meulage (13) sur un couteau (12) suivant à meuler les couteaux (12) ou un groupe de couteaux (12) peuvent ou peut être déplacé(s) transversalement.

8. Machine de récolte selon l'une quelconque des revendications précédentes, dans laquelle les couteaux (12) sont maintenus fixes dans leur position de meulage et pour placer les dispositifs de meulage (13) sur un couteau suivant à meuler les dispositifs de meulage (13) sont montés de manière à pouvoir se déplacer transversalement par rapport aux couteaux (12).

9. Machine de récolte selon l'une quelconque des revendications précédentes, dans laquelle les dispositifs de meulage (13) sont montés chacun au moyen d'un guide longitudinal (25) et/ou d'une suspension de guidon oscillante de manière mobile le long de la lame des couteaux (12).

10. Machine de récolte selon l'une quelconque des revendications précédentes, dans laquelle le porte-couteau (11) est monté de manière mobile le long des lames des couteaux (12) au moyen d'un guide coulissant et/ou d'une suspension de guidon oscillante, pour déplacer le dispositif de meulage (13) le long de la lame des couteaux par rapport aux couteaux (12).
